(19) Europäisches Patentamt
European Patent Office
Office européen des brevets

(11) Veröffentlichungsnummer: **0 170 980**
**B1**

(12) **EUROPÄISCHE PATENTSCHRIFT**

(45) Veröffentlichungstag der Patentschrift: **13.06.90**

(51) Int. Cl.⁵: **B 65 D 23/00, B 65 D 51/28**

(21) Anmeldenummer: **85109266.8**

(22) Anmeldetag: **24.07.85**

(54) **Misch- und Sprühvorrichtung.**

(30) Priorität: **04.08.84 DE 8423325 u**

(43) Veröffentlichungstag der Anmeldung:
**12.02.86 Patentblatt 86/07**

(45) Bekanntmachung des Hinweises auf die
Patenterteilung:
**13.06.90 Patentblatt 90/24**

(84) Benannte Vertragsstaaten:
**AT BE CH DE FR GB IT LI LU NL SE**

(56) Entgegenhaltungen:
| | |
|---|---|
| EP-A-0 133 293 | FR-A-2 153 767 |
| DE-A-1 939 086 | FR-A-2 369 178 |
| DE-A-2 638 561 | GB-A-1 083 335 |
| FR-A- 627 048 | GB-A-2 095 637 |
| FR-A-1 039 339 | US-A-4 088 246 |

(73) Patentinhaber: **SHELL INTERNATIONALE
RESEARCH MAATSCHAPPIJ B.V.
Carel van Bylandtlaan 30
NL-2596 HR Den Haag (NL)**

(72) Erfinder: **Itzel, Hanshelmut, Dr. Dipl.-Chem.
In Herzenacker 51
D-6535 Gau-Algesheim (DE)**
Erfinder: **Barth, Volker
Robert Koch Strasse 28
D-6508 Alzey (DE)**

(74) Vertreter: **Bennett, David Arthur Horder et al
4, York Road
London SE1 7NA (GB)**

**Beschreibung**

Die Erfindung betrifft eine Vorrichtung, mit der Konzentrate, insbesondere Pflanzenschutzmittel-konzentrate sicher und ohne Dosierungsfehler mit einer geeigneten Flüssigkeit auf Anwendungskonzentration verdünnt und durch Spritzen, Sprühen oder Vernebeln ausgebracht werden können.

Eine der wichtigsten Ausbringungsformen von Pflanzenschutzmitteln ist das Versprühen von wäßrigen Pflanzenschutzmittel lösungen mit Spritzen. Es sind Spritzen unterschiedlicher Größe bekannt, bei denen das Sprühmittel mittels einer handoder motorbetriebenen Pumpe ausgebracht wird. Die Spritzbrühe wird erst kurz vor der Anwendung durch Verdünnen eines Wirkstoffkonzentrates mit Wasser oder einer anderen geeigneten Flüssigkeit hergestellt. Ein wesentlicher Nachteil dieses Verfahrens ist, daß der Anwender beim Mischen der Spritzbrühe mit dem Wirkstoffkonzentrat in Berührung kommt. Zudem sind Fehldosierungen leicht möglich und oftmals werden mehr Mittel ausgebracht, als zur Durch-führung der Pflanzenschutzmaßnahme notwen-dig und sinnvoll sind. Außerdem gibt es Probleme mit der Beseitigung der Pflanzenschutzmittelreste bzw. mit der Aufbewahrung der nicht verbrauchten Pflanzenschutzmittelkonzentrate.

Die hier geschilderten Nachteile treten besonders bei Kleinanwendern im Haus- und Gartenbereich auf, weil dieser Personenkreis oft nur geringste Mengen Pflanzenschutzmittel benötigt, durch die Vielfalt der von ihm kultivierten Pflanzen aber eine größere Zahl unterschiedlich wirksamer Pflanzenschutzmittel bereithält. So muß der Kleinanwender stets für eine ordnungsge-mäße Lagerung bereits angebrochener Packun-gen von Wirkstoffkonzentraten Sorge tragen.

Moderne Pflanzenschutzmittel sind so weit entwickelt, daß nur noch geringste Mengen aktiver Substanz benötigt werden, um die erwünschte Wirkung zu erreichen.

Bei der Anwendung von Pflanzenschutzmitteln im Kleinverbraucherbereich sind zur Herrichtung der hier benötigten geringen Mengen Spritzbrühe (etwa 0,5 bis 10 l) nur noch kleinste Volumina an Lösungsmittelkonzentrat erforderlich. Das Abmessen dieser Konzentratmengen, die je Liter Spritzbrühe oftmals weniger als 1 ml betragen, ist sehr schwierig.

Meßfehler, die zu Über- und Unterdosierungen führen, sind daher häufig. Eine Verdünnung des Lösungsmittelkonzentrates würde zwar die Genauigkeit beim Abmessen verbessern, hat aber den Nachteil, daß mehr Hilfsstoffe und Lösungsmittel verwendet werden, als zur Durchführung der Pflanzenschutzmaßnahmen erforderlich sind. Zudem sind verdünnte Lösungen instabiler als konzentrierte Lösungen.

Auch werden Lösungsmittelkonzentrate häufig falsch dosiert, weil viele Anwender überfordert sind, aus den vom Hersteller empfohlenen Anwendungskonzentrationen die dem Fassungsvermögen der Druckspritze entsprechende Dosis an Wirkstoff-Konzentrat zu errechnen.

Inzwischen werden auch auf Anwendungskon-zentration verdünnte wäßrige Pflanzenschutzmit-tel-Lösungen angeboten, welche in Flaschen mit Pumpenzerstäubern abgefüllt sind. Dadurch sind Fehldosierungen ausgeschaltet und der Anwender kommt mit dem Wirkstoff-Konzentrat nicht in Kontakt.

Die Lagerstabilität solcher wäßriger Formulierungen ist aber meist unbefriedigend. Zudem ist für derartige Flaschen der Lager- und Transportaufwand hoch, da die Lösungen in der Regel zu über 99 % Wasser enthalten.

Zur Lösung des Problems der Lagerstabilität und der Dosiergenauigkeit wird in der DE-AS 19 39 086 ein Behälter zur Aufbewahrung und zum Ansetzen einer Pflanzenschutzmittelspritzbrühe vorgeschlagen.

In eine das Verdünnungsmittel enthaltende Flasche sind mehrere Becher engesteckt in denen das Konzentrat getrennt von Verdünnungsmittel aufbewahrt ist. Durch das Aufstecken einer Handpumpe durchstößt die Steigleitung der Pumpe die Becherböden von außen nach innen.

Nach dichtem Verschluß der Handpumpe kann das Konzentrat mit dem Verdünnungsmittel vermischt und dann mit der Handpumpe versprüht werden.

Mit dieser Vorrichtung ist das Problem mangelhafter Lagerstabilität gelöst, denn Wirkstoff und Verdünnungsmittel sind bis zum Zeitpunkt des Verbrauches voneinander getrennt. Ungelöst bleiben aber folgende Punkte, die wie folgt zusammengefaßt werden können:

Die Konzentratbecher werden von außen nach innen geöffnet. Es besteht Gefahr unverdünnt auslaufenden Konzentrates.

Die Steigleitung durchstößt die einzelnen Becherböden nur mit einem Umfang, der durch den Radius der Steigleitung begrenzt ist. Dadurch, und weil die Steigleitung in dieser Offnung verbleibt, können Verdünnungsmittel und Konzentrat nur unvollständig miteinander gemischt werden, besonders dann, wenn das Konzentrat höhere Viskositäten aufweist.

Dadurch, daß die Steigleitung die Aufgabe besitzt, den Becherboden zu durchstoßen, muß diese eine sehr hohe Festigkeit haben und kann nicht flexibel sein. Dies führt dazu, daß die herge-stellte Verdünnung nicht komplett durch Sprühen aus dem Behälter entfernt werden kann. Es verbleibt ein Rest an Verdünnung.

Vom gesamten Systemaufbau her betrachtet, kann diese Vorrichtung nur dann sinnvoll angewendet werden, wenn Verdünnungsmittel und Konzentrat in einer Flasche zusamen abgepackt angeboten werden.

Damit sind die vorstehend beschriebenen Probleme des hohen Lager- und Transportaufwandes nicht gelöst.

Es gibt bisher noch keine voll zufriedenstell lende wiederverwendbare Vorrichtung zur Applikation von Pflanzenschutzmittel-Spritzbrüchen, welche die Gesichtspunkte von größtmöglicher Gebrauchssicherheit, guter Lagerstabilität, geringem Lager- und Transportaufwand sowie guter Mischbarkeit von Konzentrat und Verdünnungsmittel in sich vereinigt.

Ziel der vorliegenden Erfindung ist es daher, eine Vorrichtung zu schaffen, in der all diese Punkte in einer einzigen Vorrichtung gelöst sind.

Diese Aufgabe wird erfindungsgemäß durch eine Vorrichtung nach Anspruch 1 gelöst.

Weitere Einzelheiten, Merkmale und Vorteile der Erfindung ergeben sich aus der Beschreibung und dem in den Zeichnungen rein schematisch dargestellten Ausführungsbeispiel.

Es zeigen:

Figur 1: Gefäß (1) mit Handpumpe (2), Füllöffnung (3) und Verschlußkappe (5) in Form einer Zweihalsflasche.

Figur 2: Gefäß (1) mit Handpumpe (2), Verschlußkappe (5) und seitlich angeordneter Füllöffnung (3)

Figur 3: Verschlußkappe (5) mit abtrennbarem Becherboden in vorläufiger Verbindung mit der Füllöffnung (3) und

Figur 4: Verschlußkappe (5) mit abtrennbarem Becherboden bei fester Verbindung der Füllöffnung (3)

Figur 5: Verschlußkappe (5) in vorläufiger Verbindung mit der Füllöffnung (3) (Figur 5a) sowie zwei Querschnitte durch die Füllöffnung (Figur 5b, 5c) in Höhe der Elemente (22) bzw. (24).

Figur 6: Verschlußkappe (5) in fester Verbindung mit der Füllöffnung (3)

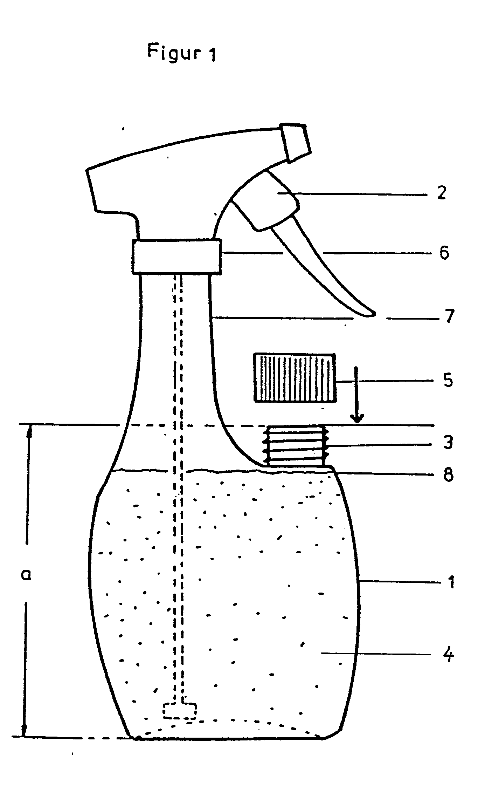

Die Wirkungsweise der erfindungsgemäßen Vorrichtung wird zunächst anhand des in Figur 1, 3 und 4 dargestellten Ausführungsbeispiels erläutert:

Gefäß (1) besitzt zwei Öffnungen, welche in verschiedener Höhe angebracht sind. Die eine Öffnung (6) dient als Befestigungspunkt für die Handpumpe (2).

In Figur 1 ist die erfindungsgemäße Vorrichtung in einer Ausführungsform als Zweihalsflasche gezeigt. Der die Handpumpe tragende längere Flaschenhals (7) ist so ausgeformt, daß er zugleich als unteres Griffstück für die Handpumpe (2) dient. Der kürzere Flaschenhals (8) trägt an seinem oberen Ende im Abstand (a) vom Flaschenboden die Füllöffnung (3), auf die eine ein Konzentrat enthaltende Verschlußkappe (5) aufgeschraubt werden kann.

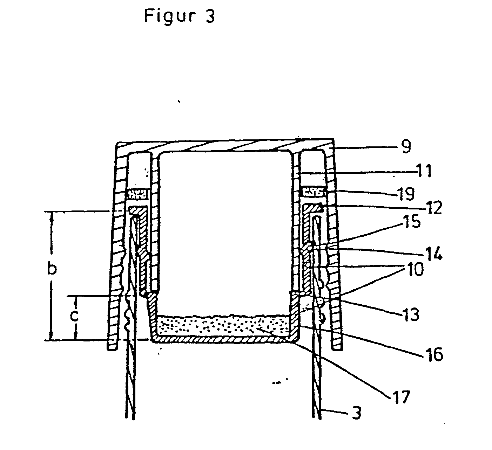

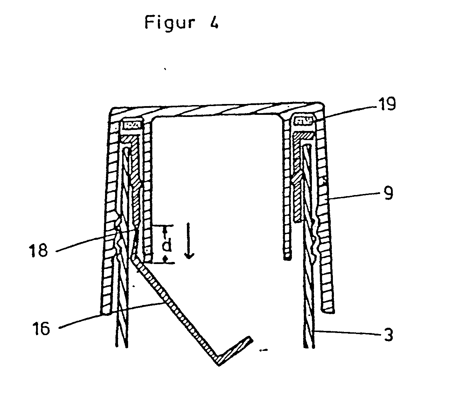

Figur 3 und 4 sind Detailzeichnungen von Ausführungsformen der Verschlußkappe (5), die im wesentlichen aus einer Schraubkappe (9) und einem Becher (10) besteht.

Im Innern der Schraubkappe befindet sich ein axial vom Boden ausgehender Kragen (11), auf dessen äußere Mantelfläche der Becher (10) aufgesteckt ist. Der vorzugsweise aus Kunststoff bestehende Becher (10) hat im oberen Abschnitt einen auswärtsgerichteten Rand (12), welcher so ausgeformt ist, daß er auf den oberen Rand der Füllöffnung (3) paßt, ohne überzustehen. Die Höhe (b) des Randes (12) definiert die Einhängtiefe des Bechers (10) in die Füllöffnung (3). In seinem unteren Teil verjüngt sich der Becher (10) an einer als Sollbruchstelle ausgebildeten Ringstufe (13). Dabei dient der untere Rand des Kragens (11), als Stoßkante, auf dem die Ringstufe (13) bündig aufsitzt. Der Becher (10) kann mit radial umlaufenden wulstförmigen Verdickungen (14) zur äußeren Mantelfläche des Kragens (11) und (15) zu der die Verschlußkappe (5) tragenden Füllöffnung (3) abgedichtet werden. Beim Einschrauben der Verschlußkappe (5) drückt der untere Rand des Kragens (11) auf die als Sollbruchstelle ausgebildete Ringstufe (13) und zertrennt den Becher (10) in der Höhe (c), wobei der untere Teil (16) abfällt und das Füllgut (17) in das Gefäß (1) entleert. Der untere Teil (16) des Bechers (10) kann auch als flache Scheibe ausgebildet sein, d.h. die Sollbruchstelle befindet sich direkt am unteren Rand des Bechers (10) oder sie ist ein Bestandteil des Becherbodens.

Figur 4 zeigt eine besondere Ausführungsform des Bechers (10), bei der der untere Teil (16) bei fester Verbindung von Verschlußkappe (5) und Füllöffnung (3) nicht abfällt, sondern an einer Stelle (18) der Ringstufe (13) noch anhängt. Da die Schraubkappe (9) bis zum vollständig dichten Sitz um die Strecke (d) eingeschraubt werden muß, wird auch der Kragen (11) um die Strecke (d) nach unten verschoben und drückt den unteren Teil des Bechers zur Seite, so daß das Füllgut (17) vollständig entleert wird oder daß eine hinreichend große Öffnung verbleibt um das Füllgut (17) mit einem im Gefäß (1) vorgelegten Verdünnungsmittel auszuwaschen ohne daß der teilweise abgetrennte Becher (16) als Sperre dienen kann.

Das unvollständige Abreißen des Bodens (16) kann mit einfachen Mitteln erreicht werden, wie z.B. einer teilweisen Verdickung der Sollbruchstelle (13) in einem eng begrenzten Bereich, durch die Wahl eines unter Druckbelastungen dehnbaren Kunststoffmaterials oder dadurch, daß die Stoßkante des Kragens (11) nur an einer Stelle auf der Ringstufe (13) aufsitzt. Es kann aber auch ein Becher (10) verwendet werden, bei dem der Boden (16) vollständig abtrennbar ist, wobei insbesondere durch einfache Maßnahmen erreicht werden kann, daß das Öffnen des Reservoirs—d.h. das Abfallen des Becherbodens (16)—sich durch ein Knacken oder eine deutliche Änderung des Drehwiderstandes beim Verschrauben der Verschlußkappe (5) anzeigt. Durch einfache Maßnahmen kann sichergestellt werden, daß der Becher (10) beim Herausschrauben der Verschlußkappe (5) mit herausnehmbar ist und nicht in der Füllöffnung (3) stecken bleibt. Dies wird dadurch erreicht, wenn der Becher (10) fest auf der äußeren Mantelfläche des Kragens (11) sitzt und weniger fest an der inneren Fläche der Füllöffnung (3) anliegt. Die Verringerte Dichtigkeit der Verschlußkappe (5), kann durch eine zwischen Kragen (11) und äußere Schraubkappe eingelegte Ringdichtung (19) verbessert werden.

Die Handhabung der erfindungsgemäßen Vorrichtung geschieht so, daß der Anwender das Gefäß (1) mit der Handpumpe (2) durch die zweite Öffnung - die Füllöffnung (3) - zunächst mit dem Verdünnungsmittel (4) - meist Wasser - füllt und danach eine Verschlußkappe (5) in der das Konzentrat (17) enthalten ist aufschraubt. Beim Verschrauben wird der Becher (10) getrennt und das Konzentrat (17) kann durch Schütteln mit dem Verdünnungsmittel gemischt werden, ohne daß der Anwender mit dem Konzentrat (17) in Berührung kommt.

Neben den zu der Erläuterung des Wirkungsprinzips anhand der Zeichnungen 3 und 4 beschriebenen Verschlußkappen, bei denen das Reservoir mittels eines kantig ausgebildeten Teils der Verschlußkappe geöffnet wird, können auch Verschlußkappen-Systeme verwendet werden, bei denen ein Teil der Füllöffnung dergestalt kantig oder spitz ausgebildet ist, daß das Reservoir bei vorläufigem Verschluß von Verschlußkappe (5) und Füllöffnung verschlossen und bei festem Verschluß von Verschlußkappe (5) und Füllöffnung geöffnet ist.

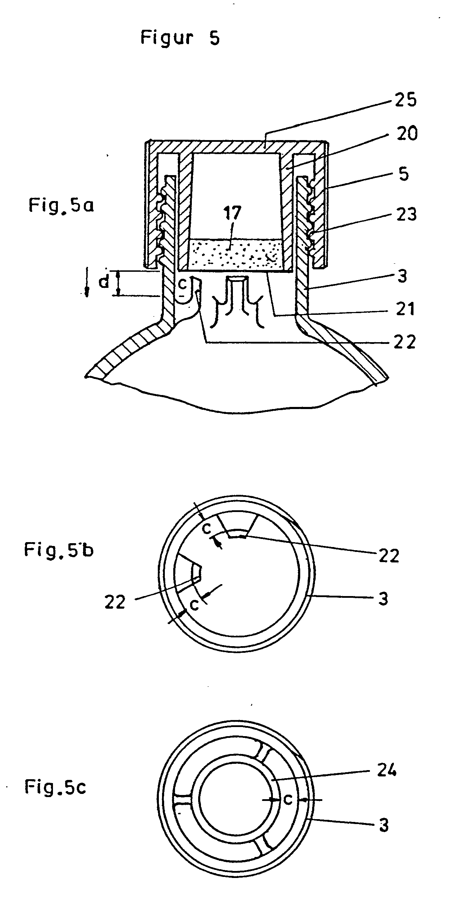

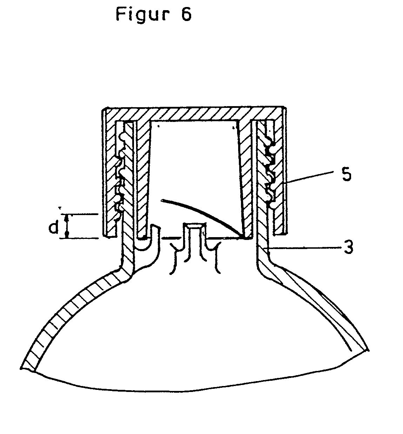

Figur 5 zeigt eine mit der Füllöffnung (3) in vorläufiger Verschlußstellung verbundene Verschlußkappe (5). Anhand dieser Zeichnung und anhand von Figur 6, welche dieselbe Verschlußkappe in endgültiger Verschlußstellung zeigt, soll das Wirkungsprinzip von Verschlußkappen (5) erläutert werden, bei denen das Reservoir durch kantig oder spitz ausgebildete Teile der der Fülöffnung (3) geöffnet wird.

Dieser Verschlußkappentyp der mittels des Gewindes (23) mit der Füllöffnung (3) verbunden werden kann enthält einen senkrecht vom Kappenboden nach innen rechenden Kragen (20), dessen unteres Ende mit einem Abschlßelement (21) verschlossen ist.

Der durch die Elemente Kappenboden (25), Kragen (20) und Abschlußelement (21) begrenzte Hohlraum bildet das Reservoir, in welches das Konzentrat (17) eingeschlossen ist.

Da Abschlußelement (21) ist vorzugsweise eine mit dem unteren Rand des Kragens (20) dicht verbundenen Folie. An der Innenwand der Füllöffnung (3) sind ein oder mehrere Dorne (22) angebracht, die im Abstand c von der Innenwand parallel zur Innenwand mit ihrem oberen Ende zur Füllöffnung hin ausgerichtet sind. Beim Verschrauben der Verschlußkappe (5) bis zum festen Sitz wird das Reservoir um die Strecke d in die Füllöffnung hinein verschoben. Das Element (22) durchtrennt das Element (21) so daß die Verbindung zwischen dem Reservoir und dem Verdünnungsmittel hergestellt ist.

Der Dorn (22) kann auch als durchlaufende Ringstufe (24) ausgebildet sein. Dies sei anhand der Fig. 5b und 5c verdeutlicht, die einen Querschnitt durch die Füllöffnung in der Höhe des Elements (22) bzw. (24) zeigen.

Figur 5b beschreibt eine mögliche Anordnung von zwei Dornen (22), die im Abstand c von der Innenwand der Füllöffnung (3) zur Mitte der Fülöffnung hinausgerichtet sind. Figur 5c betrifft ein als Ringstufe ausgebildetes Element (24), welches ebenfalls im Abstand c von der Innenwand der Füllöffnung (3) zur Mitte der Füllöffnung hin ausgerichtet ist.

Weitere Verschlußkappen (5), die durch Elemente die der Füllöffnung zuzuordnen sind geöffnet werden, sind in der deutschen Gebrauchsmusteranmeldung DE-GB 85 02 007 beschrieben auf die hiermit Bezug genommmen wird.

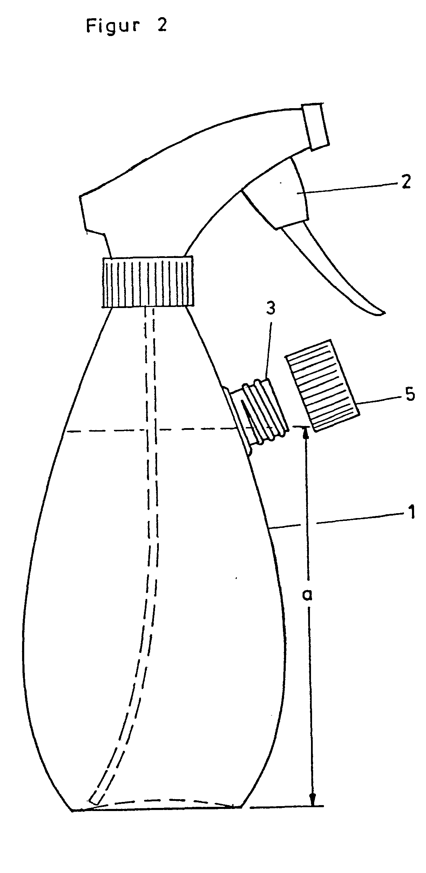

Die Füllöffnung kann sowohl auf dem zweiten, kürzeren Hals einer Zweihalsflasche (Figur 1) oder aber seitlich an dem die Handpumpe (2) tragenden Hals einer Einhalsflasche angebracht sein (Figur 2), soll sich aber stets unterhalb der Handpumpe (2) befinden, so daß sie in der Höhe a zwischen Flaschenboden und Handpumpe angeordnet ist und somit zwei Füllmengen in der erfindungsgemäßen Vorrichtung bestimmt.

Füllmenge 1 ist die bei senkrechter Haltung maximal in die Flasche einfüllbare Menge an Verdünnungsmittel (4).

Füllmenge 2 ist das über dem vorschriftsmäßig eingefüllten Verdünnungsmittel (4) mit eingeschlossene Luftvolumen.

Die Vorteile der erfindungsgemäßen Vorrichtung zeigen sich insbesondere bei der Herstellung von Pflanzenschutzmittelspritzbrühen:

Die Dosierung des Konzentrats (17) wird vom Hersteller der Verschlußkappe (5) durchgeführt und ist genau auf die Menge des Verdünnungsmittels (4) abgestimmt. Die einzige Anforderung die an den Anwender gestellt ist besteht darin, das Verdünnungsmittel (4) - meist Wasser - durch die Füllöffnung (3) bis auf das durch die Höhe a definierte Niveau einzufüllen. Aufgrund dieser einfachen Handhabung können Dosierungsfehler ausgeschlossen werden.

Der Anwender kann bei bestimmungsgemäßem Gebrauch die Flasche nur bis auf das durch die Füllöffnung (3) vorgegebene Niveau a mit dem Verdünnungsmittel (4) - meist Wasser - füllen. Oberhalb dieses Niveaus befindet sich eine durch das Gesamtvolumen der Flasche vorgegebene Menge an Luft. Wird die das Konzentrat (17) enthaltende Verschlußkappe (5) mit der Füllöffnung verbunden, so öffnet sich bei festem Verschluß wie zuvor beschrieben das Reservoir zum Verdünnungsmittel (4) hin. Weil das Reservoir dann entweder bereits in das Verdünnungsmittel eingetaucht ist oder kurz darüber steht, kann das Verdünnungsmittel (4) bereits bei leichten Schüttelbewegungen das Reservoir durchspülen und das Konzentrat (17) auswaschen. Des weiteren wird durch die mit eingeschlossene Luft (Füllmenge 2) der gesamte Flascheninhalt turbulent durchmischt was eine besonders schnelle und vollständige Durchmischung von Konzentrat (17) und Verdünnungsmittel (4) bewirkt. Das Verhältnis der beiden Füllmengen 2 und 1 beträgt etwa 1:20 bis l:2 (Luft zu Verdünnungsmittel), um eine gute Durchmischung sicherzustellen. Bevorzugt ist ein Verhältnis von 1:10 bis 1:5.

Die Verbesserung der Durchmischung von Verdünnungsmittel (4) und Konzentrat (17) durch den Einschluß einer definierten Luftmenge zeigt sich insbesondere dann wenn:

- geringe Konzentratmengen (17) mit großen Mengen an Verdünnungsmittel (4) mit einander durchmischt werden sollen.

- Konzentrat (17) und Verdünnungsmittel (4) unterschiedliche Viskosität haben.

- das Konzentrat (17) als Feststoff (Pulver) vorliegt.

- das Konzentrat (17) mit dem Verdünnungsmittel (4) trotz Zugabe von Detergentien nur schwer gelöst bzw. benetzt wird.

- als Produkt der Mischung von Konzentrat (17) und Verdünnungsmittel (4) Micellen des Konzentrates in Verdünnungsmittel erzielt werden sollen.

Die meisten Pflanzenschutzmittelkonzentrate enthalten Detergentien, die bei turbulenter Durchmischung mit Luft schäumen, wobei diese Schäume noch mehrere Minuten nach dem Mischvorgang nachsteigen. Bei frisch angesetzten Pflanzenschutzmittel-Spritzbrühen muß deshalb mit dem Umfüllen in die Spritze gewartet werden, bis der Schaum gebrochen ist. Demgegenüber kann bei der erfindungsgemäßen Vorrichtung unmittelbar nach dem Ansetzen der Spritzbrühe mit deren Ausbringen begonnen werden. Dies wird erreicht, weil die erfindungsgemäße Vorrichtung als ein nach außen geschlossenes System aufgebaut ist bei dem das vom Gefäß (1) getrennt zur Verfügung stehende Konzentrat in einem Reservoir eingeschlossen ist, wobei das Öffnen des Reservoirs sowie die Vermischung von Konzentrat und Verdünnungsmittel im Innern des Systems stattfinden und auch das Verspühen ohne Öffnen des Systems möglich ist so daß der Anwender zu keinem Zeitpunkt mit dem Konzentrat oder mit Schäumen der Spritzbrühe in Kontakt kommt. Dennoch kann durch die erfindungsgemäße Vorrichtung eine optimale Durchmischung bei exakter Dosierung erzielt werden.

Die verbesserte Durchmischung von Konzentrat (17) und Verdünnungsmittel (4) in der erfindungsgemäßen Vorrichtung, sowie deren verbesserte Gebrauchssicherheit zeigt sich insbesondere im Vergleich mit der aus der DE-AS 19 39 068 bekannten Vorrichtung. Hier sind Füllöffnung und Spenderöffnung der gleichen Flaschenöffnung zugeordnet. Daher muß die Steigleitung der Handpumpe notwendigerweise das Reservoir zuerst nach außen hin öffnen, bevor es zum Verdünnungsmittel hin geöffnet werden kann. Das Reservoir ist zum Verdünnungsmittel nur in dem Umfang geöffnet, wie es mit der Steigleitung zerstochen werden kann. Weil außerdem die Steigleitung noch in dieser Öffnung verbleibt wird das Ausspülen des Konzentrates erheblich erschwert.

Das Problem der Beseitigung oder der sicheren Lagerung der angebrochenen Packungen mit Pflanzenschutzmittel-Konzentraten entfällt bei der erfindungsgemäßen Vorrichtung, da bis zum Zeitpunkt des Verbrauchs das Pflanzenschutzmittel in der Verschlußkappe sicher verwahrt ist und keinerlei den Wirkstoff zersetzenden Einflüssen, wie Licht, Luftfeuchtigkeit, Luftsauerstoff etc. ausgesetzt ist. Die Pflanzenschutzmittel können als Emulsion, Suspension, Dispersion oder als Lösung versprüht werden, wobei dem Konzentrat geeignete Emulgier- und/oder Netzmittel zugesetzt werden können.

Als Verdünnungsmittel sind grundsätzlich alle versprühbaren Flüssigkeiten geeignet, Wasser wird jedoch bevorzugt. Die erfindungsgemäße Vorrichtung ermöglicht es, Stoffe die in Lösung, z.B. in Wasser, über längere Zeit nicht stabil sind, dennoch in Form verdünnter Lösungen zu versprühen, weil die Spritzbrühe erst kurz vor Gebrauch hergestellt wird, der Stoff aber als Konzentrat in Form einer lagerstabilen Formulierung unzersetzt haltbar ist.

Ein weiterer wesentlicher Vorteil der erfindungsgemäßen Vorrichtung liegt darin begründet, daß auch physikalisch instabile Mehrphasensysteme als Pflanzenschutzmittel-Konzentrat Verwendung finden können. In der konventionellen Pflanzenschutztechnik sind Systeme, in denen zwei oder mehrere nicht mischbare flüssige oder feste Phasen auftreten, bisher wenig bekannt, da eine genaue Dosierung unmöglich ist, wenn nicht der gesamte Inhalt des Gebindes auf einmal verwendet wird.

Deshalb haben sich entmischende mehrphasige Pflanzenschutzmittel-Konzentrate bisher keine Anwendung gefunden. Bei der erfindungsgemäßen Vorrichtung werden jedoch alle der Verschlußkappe (5) eingefüllten Stoffe in die Spritze umgefüllt. Dabei ist es unerheblich, ob das Konzentrat aus einer homogenen Phase oder aus einem mehrphasigen System besteht.

Ein weiterer die Gebrauchssicherheit von Pflanzenschutzmittel- Spritzbrühen betreffender Vorteil ist darin zu sehen, daß die Verschlußkappe (5) bis zum vollständigen Verbrauch der Spritzbrühe auf dem Gefäß (1) verbleibt und der Anwender durch Aufdrucke auf dieser Kappe (5) stets über das in dem Gefäß (1) befindliche Mittel informiert ist.

Die Verwendung der erfindungsgemäßen Vorrichtung ist nicht auf den Pflanzenschutzbereich beschränkt. Vielmehr kann sie stets dann vorteilhaft eingesetzt werden, wenn aus einem Konzentrat und einem geeigneten Verdünnungsmittel eine Mischung hergestellt und dann durch Versprühen ausgetragen wird.

So ist sie z.B. anwendbar für Mittel zur Desinfektion; zum Aufbringen von Lack- oder Klebefilmen, wobei beispielsweise ein Härter in der Verschlußkappe als Konzentrat Verwendung findet, außerdem für Reinigungs- oder Konservierungsmittel.

1 Gefäß
2 Handpumpe
3 Füllöffnung
4 Verdünnungsmittel
5 Verschlußkappe
6 Öffnung f. Handpumpe
7 längerer Flaschenhals
8 kurzerer Flaschenhals
9 Schraubkappe
10 Becher
11 Kragen
12 auswärts gerichteter Rand
13 Ringstufe
14 wulstförmige Verdickungen (kragenseitig)
15 wulstförmige Verdickungen (Mantelinnenfläche)
16 unterer Teil des Bodens

17 Füllgut, Konzentrat
18 Verdickung der Sollbruchstelle
19 Ringdichtung
20 Kragen
21 Abschlußelement
22 Dorn
23 äußeres Gewinde
24 Ringstufe
25 Kappenboden

**Patentansprüche**

1. Vorrichtung zum Mischen und Versprühen eines Flüssigkeitsgemisches aus Verdünnungsmittel (4) und Konzentrat (17), bestehend aus einem Gefäß (1) zur Aufnahme des Verdünnungsmittels (4) und einer Handpumpe zum Ausbringen des Flüssigkeitsgemisches, dadurch gekennzeichnet, daß

a) as Gefäß (1) oberhalb des Bodens des Gefäßes eine zusätzliche zur Aufnahme einer Verschlußkappe (5) hergerichtete Füllöffnung (3) aufweist
und

b) daß die Verschlußkappe (5) ein in die Füllöffnung (3) hineinreichendes Reservoir zur Aufnahme des Konzentrates (17) aufweist
wobei

c) ein Teil der Verschlußkappe (5) oder ein Teil der Füllöffnung (3) in der Weise kantig oder spitz ausgebildet ist, daß das Reservoir bei einer vorläufigen Verbindung von Verschlußkappe (5) und Füllöffnung (3) verschlossen und bei dichter Verbindung von Verschlußkappe (5) und Füllöffnung (3) die Wandung des Reservoirs zum Innenraum der Füllöffnung (3) hin geöffnet ist.

2. Vorrichtung nach Anspruch 1, dadurch gekennzeichnet, daß das Verhältnis des in die Vorrichtung eingeschlossene Luftvolumens zu dem durch die Höheder Füllöffnung definierten Füllvolumens im Bereich von 1:20 bis 1:2 vorzugsweise 1:10 bis 1:5 liegt.

3. Vorrichtung nach Anspruch 1, 2 dadurch gekennzeichnet, daß die, Verschlußkappe (5) aus einer Schraubkappe mit einem axial vom Boden der Schraubkappe nach innen reichenden Kragen (1) und einem auf diesen Kragen (11) aufgesteckten Becher (10), der als Reservoir dient, besteht und daß sich der Becher (10) längs einer radial ausgebildeten Ringstufe (13), die als Sollbruchstelle dient, verjüngt, so daß der untere Rand des Kagens (11) ganz oder teilweise als Stoßkante im Innern des Bechers auf dieser Ringstufe (13) aufsitzt und daß der Becher (10) in seinem oberen Abschnitt einen auswärts gerichteten Rand (12) besitzt, der so bemessen ist, daß er paßgenau auf dem oberen Rand der Füllöffnung (3) aufsitzt.

4. Vorrichtung nach Anspruch 1, 2 dadurch gekennzeichnet, daß die Verschlußkappe (5) aus einer Schraubkappe und einem axial vom Boden der Schraubkappe nach innen reichenden Kragen (11) und einem auf diesen Kragen aufgesteckten Becher, der als Reservoir dient, besteht und daß der Boden des Bechers auf dem als Stoßkante dienenden unteren Rand des Kragens (11) aufsitzt und daß der Becher an seinem unteren Rand oder auf seinem Boden eine Sollbruchstelle aufweist und in seinem oberen Abschnitt einen auswärts gerichteten Rand besitzt, der so bemessen ist, daß er paßgenau auf dem oberen Rand der Füllöffnung (3) aufsitzt.

5. Vorrichtung nach Anspruch 1, 2 dadurch gekennzeichnet, daß die Verschlußkappe (5) aus einer Schraubkappe mit einem axial vom Schraubkappenboden nach innen reichenden Kragen (20) und einem mit dem unteren Rand des Kragens (20) dicht abschließenden Abschlußelement (21) besteht, wobei ein oder mehrer von der Innenwand der Füllöffnung (3) ins Innere reichende und zum oberen Rand der Füllöffnung (3) hin ausgerichtete und mit der Wandung der Füllöffnung (3) starr verbundene Dorne (22) oder eine Ringstufe (24) so angeordnet sind, daß bei vorliegender Verbindung von Verschlußkappe (5) und Füllöffnung (3) das Abschlußelement (21) die Dorne (22) oder die Ringstufe (24) nicht berührt und bei fester Verbindung von Verschlußkappe (5) und Füllöffnung (3) die Dorne (22) oder die Ringstufe (24) das in die Füllöffnung hinein verschobene Abschlußelement (21) durchstoßen.

6. Verfahren zum Mischen, Verdünnen und Versprühen einer aus Konzentrat (17) und Verdünnungsmittel (4) hergestellten Spritzbrühen mittels einer Vorrichtung nach Anspruch 1 bis 4.

7. Verwendung einer Vorrichtung nach Anspruch 1 bis 4 zum Mischen, Verdünnen und Versprühen einer aus Konzentrat (17) und Verdünnungsmittel (4) hergestellten Spritzbrühe.

8. Verwendung einer Vorrichtung nach Anspruch 1 bis 5 im Bereich des Pflanzenschutzes.

**Revendications**

1. Dispositif pour mélanger et pulvériser un mélange de liquide formé d'un agent de dilution (4) et d'un concentrat (17), se composant d'un récipient (1) pour recevoir l'agent de dilution (4) et d'une pompe à main pour la distribution du mélange de liquide, caractérisé en ce que:

a) le récipient (1) comporte, au-dessus de son fond, une ouverture additionnelle de remplissage (3) agencée pour recevoir un bouchon de fermeture (5), et

b) en ce que le bouchon de fermeture (5) comporte un réservoir, s'étendant jusqu'à l'ouverture de remplissage (3), pour recevoir le concentrat (17),

(c) une partie du bouchon de fermeture (5) ou une partie de l'ouverture de remplissage (3) étant agencée avec bord vif ou en pointe de telle sorte que le réservoir soit fermé dans le cas d'une liaison provisoire du bouchon de fermeture (5) et de l'ouverture de remplissage (3), et que, dans le cas d'une liaison permanente entre le bouchon de fermeture (5) et l'ouverture de remplissage (3), la paroi du réservoir soit ouverte en direction du volume intérieur de l'ouverture de remplissage (3).

2. Dispositif selon la revendication 2, caractérisé en ce que le rapport entre le volume d'air inclus dans le dispositif et le volume de remplissage défini par la hauteur de l'ouverture de remplissage est compris entre 1:20 et 1:2, de préférence entre 1:10 et 1:5,

3. Dispositif selon une des revendications 1 ou 2, caractérisé en ce que le bouchon de fermeture (5) se compose d'un bouchon fileté comportant une collerette (11) s'étendant axialement vers l'intérieur à partir du fond du bouchon et un pot (10) engagé sur cette collerette (11) et qui sert de réservoir, en ce que le pot (10) se rétrécit le long d'un décrochement annulaire (13) formé radialement et servant de zone de rupture imposée, de telle sorte que le bord inférieur de la collerette (11) s'appuie complètement ou partiellement comme un bord de butée contre ce décrochement annulaire (13) à l'intérieur du pot, et en ce que le pot (10) comporte, dans sa partie supérieure, un bord (12) dirigé vers l'extérieur et dimensionné de telle sorte qu'il s'appuie exactement contre le bord supérieur de l'ouverture de remplissage (3).

4. Dispositif selon une des revendications 1 ou 2, caractérisé en ce que le bouchon de fermeture (5) se compose d'un bouchon fileté et d'une collerette (11) s'étendant axialement vers l'intérieur à partir du fond du bouchon, ainsi que d'un pot engagé sur cette collerette et servant de réservoir, en ce que le fond du pot s'appuie contre le bord inférieur, servant de bord de butée, de la collerette (11), et en ce que le pot comporte, sur son bord inférieur ou dans son fond, une zone de rupture imposée et est pourvu, dans sa partie supérieure, d'un bord dirigé vers l'extérieur et dimensionné de telle sorte qu'il s'appuie exactement contre le bord supérieur de l'ouverture de remplissage (3).

5. Dispositif selon une des revendications 1 ou 2, caractérisé en ce que le bouchon de fermeture (5) se compose d'un bouchon fileté pourvu d'une collerette (20) s'étendant axialement vers l'intérieur à partir du fond du bouchon et d'un élément d'obturation (21) obturant de façon étanche le bord inférieur de la collerette (20), une ou plusieurs protubérances (22), s'étendant vers l'intérieur, orientées vers le bord supérieur de l'ouverture de remplissage (3) et reliées rigidement avec la paroi de l'ouverture de remplissage (3), ou bien un décrochement annulaire (24), sont disposés de telle sorte que, dans le cas d'une liaison provisoire du bouchon de fermeture (5) avec l'ouverture de remplissage (3), l'élément d'obturation (21) ne touche pas les protubérances (22) ou le décrochement annulaire (24) et que, dans le cas d'une liaison permanente entre le bouchon de fermeture (5) et l'ouverture de remplissage (3), les protubérances (22) et le décrochement annulaire (24) perforent l'élément d'obturation (21) engagé dans l'ouverture de remplissage.

6. Procédé pour mélanger, diluer et pulvériser une solution pulvérisable préparée à partir d'un concentrat (17) et d'un agent de dilution (4) au moyen d'un dispositif selon l'une des revendications 1 à 4.

7. Utilisation d'un dispositif selon l'une des revendications 1 à 4 pour mélanger, diluer et pulvériser une solution pulvérisable préparée à partir d'un concentrat (17) et d'un agent de dilution (4).

8. Utilisation d'un dispositif selon l'une des revendications 1 à 5 dans le domaine de la protection de plantes.

**Claims**

1) Device for the mixing and spraying of a liquid mixture of a diluent (4) and a concentrate (17), consisting of a vessel (1) designed to hold the diluent (4) and a hand pump designed to apply the liquid mixture, characterized in that

a) the vessel (1) has an additional filler opening (3) above the base of the vessel, to which the cap closure should be fitted and

b) the cap closure (5) has a reservoir extending in to the filler opening (3), designed to hold the concentrate (17) where

c) a section of the cap closure (5) or a section of the filler opening (3) is angled or pointed in such a way that when the cap closure (5) and filler opening (3) are in the preliminary closure position, the reservoir is closed and when the cap closure (5) and filler opening (3) are in the tight closure position the wall of the reservoir is opened into the filler opening (3).

2) Device according to Claim 1, characterized in that the ratio of the volume of air enclosed in the device to the volume of contents defined by the level of the filler opening is in the region of 1:20 to 1:2, but is preferably between 1:10 and 1:5.

3) Device according to Claims 1, 2 characterized in that, the cap closure (5) consists of a screw cap with a collar (11) extending axially inwards from the base of the screw cap and a beaker (10) attached to this collar (11), serving as a reservoir, and that the beaker (10) is indented along a radial annular shoulder piece (13), which serves as a desired point of break, so that the bottom edge of the collar (11) is wholly or partly resting on this annular shoulder piece (13), forming an impact edge inside the beaker and that the upper section of the beaker (10) has an edge piece (12) pointing outwards, the dimensions of which are such that it fits precisely onto the upper edge of the filler opening (3).

4) Device according to Claims 1, 2 characterized in that, the cap closure (5) consists of a collar (11) extending axially inwards from the base of the screw cap and a beaker attached to this collar and serving as a reservoir, and that the base of the beaker rests on the bottom edge of the collar which serves as an impact edge and that the bottom edge of the beaker has a desired point of break, the upper section having an edge piece the dimensions of which are such that it fits precisely onto the upper edge of the filler opening (3).

5) Device according to Claims 1, 2 characterized in that, the cap closure (5) consists of a screw cap with a collar extending axially inwards from the base of the screw cap base and a sealing element (21) providing a tight seal with the lower edge of the collar (20), where one or more members (22) extending from the internal wall of the filler opening (3) into the inside and pointing towards the upper edge of the filler opening (3) and rigidly joined to the wall of the filler opening (3), or an annular piece (24), are arranged in such a way that where the cap closure (5) and filler opening (3) are joined together, the sealing element (21) does not touch the members (22) or the annular piece (24) and where the cap closure (5) and filler opening (3) are tightly joined, the members (22) or annular piece (24) pierce the sealing element which is pushed into the filler opening.

6) Process for the mixing, dilution and spraying of a spray liquid prepared from a concentrate (17) and a diluent (4) by means of a device according to Claims 1 to 4.

7) Use of a device according to Claims 1 to 4 to mix, dilute and spray a spray liquid prepared from a concentrate (17) and a diluent (4).

8) Use of a device according to Claims 1 to 5 in the field of plant protection.

Figur 1

Figur 2

Figur 3

Figur 4

Figur 5

Fig. 5a

25
20
5
23
17
3
d
c
21
22

Fig. 5'b

c
22
22
c
3

Fig. 5c

24
c
3

Figur 6